# EUROPEAN PATENT APPLICATION

(11) **EP 3 644 259 A1**
(43) Date of publication of application: **29.04.2020**
(21) Application number: 18824574.0
(22) Date of filing: 21.06.2018
(51) Int. Cl.: G06Q 20/40, G06Q 20/32

(54) **SERVICE PROCESSING METHOD, DEVICE AND SYSTEM**

(30) Priority: 26.06.2017 CN 201710495521
(71) Applicant: Alibaba Group Holding Limited, Grand Cayman (KY)
(72) Inventor: ZHOU, Le, Hangzhou Zhejiang 311121 (CN); CHEN, Li, Hangzhou Zhejiang 311121 (CN); YIN, Huanmi, Hangzhou Zhejiang 311121 (CN); ZHANG, Hong, Hangzhou Zhejiang 311121 (CN); YAO, Sihai, Hangzhou Zhejiang 311121 (CN); ZHANG, Xiaobo, Hangzhou Zhejiang 311121 (CN)
(74) Representative: Goddar, Heinz J.
(86) International application number: PCT/CN2018/092201
(87) International publication number: WO 2019/001340

(57) **Abstract**

A service processing method, device, and system are disclosed in this application. The method includes: receiving RF signals including device identifiers and sent by terminal device(s); selecting an RF signal from the received RF signals, a terminal device corresponding to a device identifier included in the RF signal being taken as a target payment device; collecting first biometric feature information of a user using the terminal device; and after obtaining a verification result of verifying the user's identity based on the first biometric feature information, sending a payment request to a server if the verification result is passing the verification, wherein the payment request is configured to request for completing payment based on a payment account corresponding to the target payment device. A payment device is selected through the RF signal sent by the terminal device, identity authentication is performed on the user by using the collected biometric feature information, and payment is completed when the authentication is passed, thereby ensuring both security of payment operations and convenience in processing the payment operations, simplifying processes of the payment operations, and effectively improving the user experience in electronic payment.

## Description

### Technical Field

This application relates to the field of Internet information processing technologies and computer technologies, and in particular, to a service processing method, device, and system.

### Background

As a traditional payment mode, cash payment is very familiar to everyone living in modern society. However, with the development of Internet technologies, a new payment mode, i.e., electronic payment mode, has emerged.

The so-called electronic payment mode refers to that parties engaged in e-commerce transactions (including consumers, manufacturers and financial institutions) implement currency payment or fund turnover by using a digitized mode and a secure information transmission means through information networks. Compared with the cash payment mode, it brings convenience to people.

For example, in a common mobile payment mode, when a user purchases a commodity in a store, the user can start a payment application installed on a terminal device being used when paying for the commodity, acquire the merchant's information by "scanning," and complete the payment through transfer of accounts. Alternatively, the user can start the payment application installed on the terminal device being used to generate a payment code (such as a QR code) from the payment application according to a pre-bound payment account, and provide the payment code to the merchant for completing the payment.

Based on the current electronic payment mode, a service processing method is urgently needed to improve the rapidity of electronic payment.

### Summary of the Invention

In view of this, a service processing method, device, and system are provided in embodiments of this application, for improving the rapidity of electronic payment.

The following technical solutions are adopted in the embodiments of this application.

A service processing method is provided in an embodiment of this application, comprising:
receiving RF signals including device identifiers and sent by at least one terminal device;
selecting an RF signal from the received RF signals, and using a terminal device corresponding to a device identifier included in the RF signal as a target payment device;
collecting first biometric feature information of a user using the terminal device; and
after obtaining a verification result of verifying the user's identity based on the first biometric feature information, sending a payment request to a server if the verification result is passing the verification, wherein the payment request is configured to request for completing payment based on a payment account corresponding to the target payment device.

A service processing device is further provided in an embodiment of this application, comprising:
a receiving unit configured to receive RF signals including device identifiers and sent by at least one terminal device;
a selecting unit configured to select an RF signal from the received RF signals, and use a terminal device corresponding to a device identifier included in the RF signal as a target payment device;
a collecting unit configured to collect first biometric feature information of a user using the terminal device; and
a sending unit configured to, after obtaining a verification result of verifying the user's identity based on the first biometric feature information, send a payment request to a server if the verification result is passing the verification, wherein the payment request is configured to request for completing payment based on a payment account corresponding to the target payment device.

A service processing device is further provided in an embodiment of this application, comprising: at least one processor; and a memory storing programs, and configured to execute the following steps by the at least one processor:
receiving RF signals including device identifiers and sent by at least one terminal device;
selecting an RF signal from the received RF signals, and using a terminal device corresponding to a device identifier included in the RF signal as a target payment device;
collecting first biometric feature information of a user using the terminal device; and
after obtaining a verification result of verifying the user's identity based on the first biometric feature information, sending a payment request to a server if the verification result is passing the verification, wherein the payment request is configured to request for completing payment based on a payment account corresponding to the target payment device.

A service processing method is further provided in an embodiment of this application, comprising:
transmitting an RF signal including a device identifier; and
receiving payment information sent by a server after completing payment based on a payment account corresponding to the device identifier carried in a payment request sent by a service processing device, wherein the payment request is sent by the service processing device after receiving the RF signal and when obtaining a verification result that a verification on a user's identity based on collected first biometric feature information of the user is passed.

A service processing device is provided in an embodiment of this application, comprising:
a sending unit configured to transmit an RF signal including a device identifier; and
a receiving unit configured to receive payment information sent by a server after completing payment based on a payment account corresponding to the device identifier carried in a payment request sent by the service processing device, wherein the payment request is sent by the service processing device after receiving the RF signal and when obtaining a verification result that a verification on a user's identity based on collected first biometric feature information of the user is passed.

A service processing device is provided in an embodiment of this application, comprising: at least one processor; and a memory storing programs, and configured to execute the following steps by the at least one processor:
transmitting an RF signal including a device identifier; and
receiving payment information sent by a server after completing payment based on a payment account corresponding to the device identifier carried in a payment request sent by the service processing device, wherein the payment request is sent by the service processing device after receiving the RF signal and when obtaining a verification result that a verification on a user's identity based on collected first biometric feature information of the user is passed.

A service processing method is further provided in an embodiment of this application, comprising:
receiving a payment request sent by a service processing device, wherein the payment request includes a device identifier of a terminal device, and the device identifier is obtained by selecting based on RF signals via the service processing device after the RF signals sent by at least one terminal device are received;
determining a payment account corresponding to the device identifier included in the payment request according to a mapping relationship between the device identifier and the payment account; and
completing payment by using the payment account.

A service processing device is further provided in an embodiment of this application, comprising:
a receiving unit configured to receive a payment request sent by a service processing device, wherein the payment request includes a device identifier of a terminal device, and the device identifier is obtained by selecting based on RF signals via the service processing device after the RF signals sent by at least one terminal device are received;
a determining unit configured to determine a payment account corresponding to the device identifier included in the payment request according to a mapping relationship between the device identifier and the payment account; and
a processing unit configured to complete payment by using the payment account.

A service processing device is further provided in an embodiment of this application, comprising: at least one processor; and a memory storing programs, and configured to execute the following steps by the at least one processor:
receiving a payment request sent by the service processing device, wherein the payment request includes a device identifier of a terminal device, and the device identifier is obtained by selecting based on RF signals via the service processing device after the RF signals sent by at least one terminal device are received;
determining a payment account corresponding to the device identifier included in the payment request according to a mapping relationship between the device identifier and the payment account; and
completing payment by using the payment account.

A service processing system is further provided in an embodiment of this application, comprising: a service processing device, a terminal device, and a server, wherein
the service processing device is configured to receive RF signals including device identifiers and sent by at least one terminal device; select an RF signal from the received RF signals, and use a terminal device corresponding to a device identifier included in the RF signal as a target payment device; collect first biometric feature information of a user using the terminal device; and
after obtaining a verification result of verifying the user's identity based on the first biometric feature information, send a payment request to a server if the verification result is passing the verification, wherein the payment request is configured to request for completing payment based on a payment account corresponding to the target payment device;
the terminal device is configured to transmit an RF signal, and receive payment information; and
the server is configured to receive the payment request sent by the service processing device, and complete payment based on the payment account corresponding to the device identifier included in the payment request, thereby sending the payment information to the terminal device corresponding to the device identifier.

At least one of the above technical solutions adopted in the embodiments of this application can achieve the following beneficial effects.

The technical solutions provided in the embodiments of this application implement receiving RF signals including device identifiers and sent by at least one terminal device; selecting an RF signal from the received RF signals, and using a terminal device corresponding to a device identifier included in the RF signal as a target payment device; collecting first biometric feature information of a user using the terminal device; and after obtaining a verification result of verifying the user's identity based on the first biometric feature information, sending a payment request to a server if the verification result is passing the verification, wherein the payment request is configured to request for completing payment based on a payment account corresponding to the target payment device. A payment device is selected through the RF signal sent by the terminal device, the biometric feature information of the user is collected, identity authentication is performed on the user by using the collected biometric feature information, and payment is completed when the authentication is passed, thereby ensuring both security of payment operations and convenience in processing the payment operations, simplifying processes of the payment operations, implementing "hands-free payment" in the field of electronic payment, and effectively improving the user experience in electronic payment.

### Brief Description of the Drawings

The accompanying drawings described here are used to provide further understanding on this application, and constitute a part of this application. Exemplary embodiments of this application and illustrations thereof are used to explain this application, and are not intended to form improper limitation on this application. In the drawings:
FIG. 1 is a schematic flowchart of a service processing method according to an embodiment of this application;
FIG. 2 is a schematic diagram of receiving an RF signal sent by a terminal device in a detection region according to an embodiment of this application;
FIG. 3 is a schematic diagram of detecting, by an Internet of Things monitoring device, a terminal device used by a user when the user enters a target site according to an embodiment of this application;
FIG. 4 is a schematic diagram of detecting, by an Internet of Things monitoring device, a terminal device used by a user when the user departs from a target site according to an embodiment of this application;
FIG. 5 is a schematic flowchart of a service processing method according to an embodiment of this application;
FIG. 6 is a schematic flowchart of a service processing method according to an embodiment of this application;
FIG. 7 is a schematic structural diagram of a service processing device according to an embodiment of this application;
FIG. 8 is a schematic structural diagram of a service processing device according to an embodiment of this application;
FIG. 9 is a schematic structural diagram of a service processing device according to an embodiment of this application; and
FIG. 10 is a schematic structural diagram of a service processing system according to an embodiment of this application.

### Detailed Description

Compared with cash payment, the electronic payment (e.g., the above-mentioned "barcode scanning payment") mode achieves security and rapidity of payment. However, in practical applications, when a user uses a terminal device to complete payment, the current operation process is relatively complicated, thereby bringing some inconvenience to the user. For example, for a user who holds a child, using the above method to complete payment after purchasing commodities will bring inconvenience to the user.

In order to achieve the objective of this application, a service processing method, device, and system are provided in embodiments of this application, which can select a payment device through an RF signal sent by a terminal device, collect biometric feature information of a user, perform identity authentication on the user by using the biometric feature information, and complete payment after the authentication is passed, thereby ensuring both security of payment operations and convenience in processing the payment operations, simplifying processes of the payment operations, implementing "hands-free payment" in the field of electronic payment, and effectively improving the user experience in electronic payment.

The so-called "hands-free payment" may be understood as an electronic payment mode that can realize payment freely without too many payment operations of users during payment.

To make objectives, technical solutions and advantages of this application more comprehensible, technical solutions of this application are described below clearly and completely through specific embodiments of this application and corresponding accompanying drawings. Apparently, the described embodiments are merely a part of, rather than all, the embodiments of this application. Based on the embodiments of this application, all other embodiments derived by those of ordinary skill in the art without creative efforts shall fall within the protection scope of this application.

Hereinafter, the technical solutions according to each embodiment of this application will be described in detail with reference to the accompanying drawings.

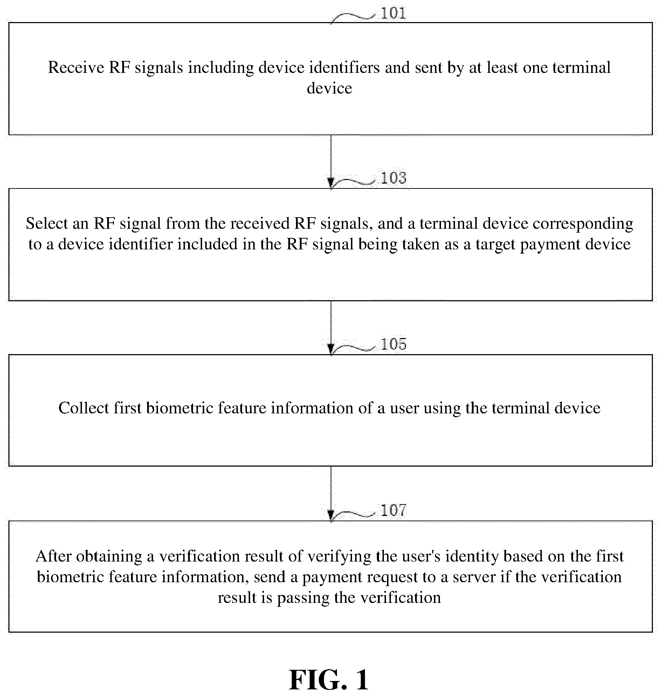

FIG. 1 is a schematic flowchart of a service processing method according to an embodiment of this application. The method may be shown as follows. The embodiment of this application may be executed by a service processing device with a checkout function.

In Step 101, RF signals including device identifiers and sent by at least one terminal device are received.

In the embodiment of this application, after entering a target site, a user can start a short-range communication function of a terminal device being used, i.e., the terminal device used by the user may send the RF signal in real time or periodically. Once the service processing device with a checkout function detects the RF signal, the user is taken as a user waiting for payment.

Specifically, the RF signals including device identifiers and sent by at least one terminal device are received through a short-range communication mode.

The short-range communication mode includes: one or more of a Bluetooth communication mode, a near field communications (NFC) mode, a wireless fidelity (WIFI) mode, and a sound wave mode.

In the embodiment of this application, a payment region, which may also be referred to as a detection region, may be also determined. Once the user enters the detection region, and the short-range communication function of the terminal device being used is started, the service processing device with a checkout function can receive the RF signal sent by the terminal device used by the user.

Specifically, when it is detected that the terminal device arrives at the detection region, RF signals including device identifiers and sent by the terminal device are received.

Specifically, the service processing device with a checkout function transmits a detection signal in the set detection region; and determines that the arrival of the terminal device at the detection region is detected when a feedback signal sent by the terminal device is received.

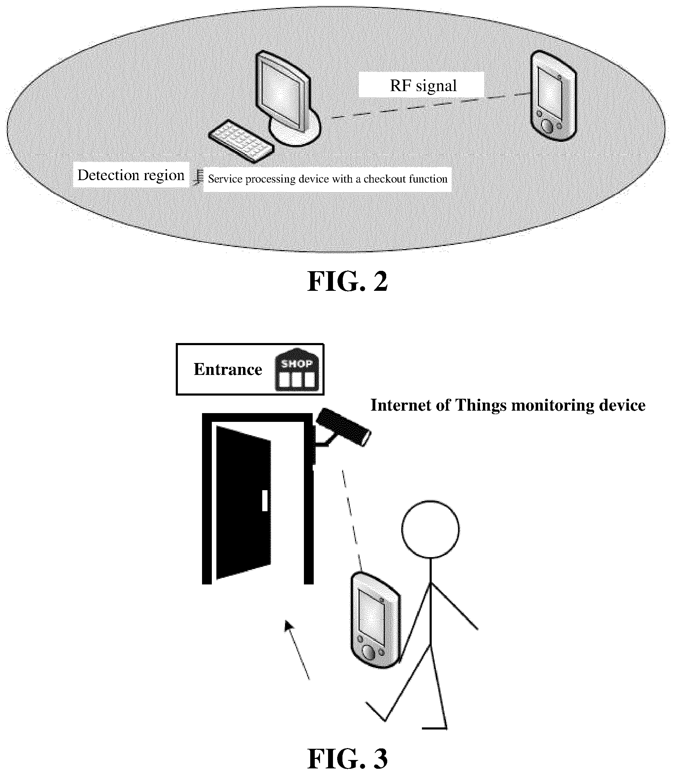

FIG. 2 is a schematic diagram of receiving an RF signal sent by a terminal device in a detection region according to an embodiment of this application.

Preferably, in the embodiment of this application, a first detection device may also be deployed in the detection region, a first detection signal (including a device identifier of the first detection device) transmitted by the first detection device covers the detection region, a second detection device is deployed out of the detection region, and a second detection signal (including a device identifier of the second detection device) transmitted by the detection device covers a region out of the detection region. Then, when the first detection signal sent by the terminal device is received, it is determined that the terminal device arrives at the detection region.

The first detection signal and the second detection signal herein can also belong to RF signals having transmitting directions opposite to each other.

Preferably, in the embodiment of this application, after a user enters a target site, an Internet of Things monitoring device in the target site may detect the terminal device used by the user, thereby determining a device identifier of the terminal device used by the user.

FIG. 3 is a schematic diagram of detecting, by an Internet of Things monitoring device, a terminal device used by a user when the user enters a target site according to an embodiment of this application.

At this time, the service processing device with a checkout function may receive first monitoring data sent by the Internet of Things monitoring device, the first monitoring data including a device identifier of the terminal device used by the user entering the target site; and store the device identifier into a user list. Thus, the service processing device with a checkout function may determine the number of the users in the target site according to the number of the device identifiers of the terminal devices.

Further, after the user departs from the target site, the Internet of Things monitoring device for detecting the departure from the target site may detect the terminal device used by the user, thereby determining the device identifier of the terminal device used by the user departing from the target site.

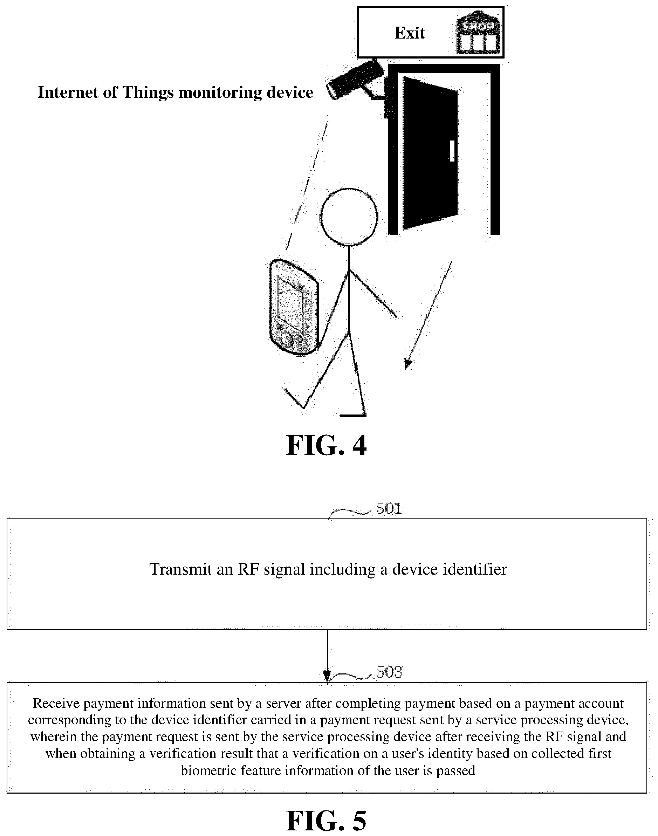

FIG. 4 is a schematic diagram of detecting, by an Internet of Things monitoring device, a terminal device used by a user when the user departs from a target site according to an embodiment of this application.

At this time, the service processing device with a checkout function may receive second monitoring data sent by the Internet of Things monitoring device, the second monitoring data including a device identifier of the terminal device used by the user departing from the target site; and update the user list according to the second monitoring data. That is, the device identifier, included in the user list, of the terminal device used by the departing user is deleted.

Preferably, after the receipt of RF signals, a device identifier of the terminal device sending each RF signal is determined, the determined device identifier is compared with the device identifier included in the user list, and the RF signals corresponding to the device identifiers that are not included in the user list are filtered out.

In Step 103, an RF signal is selected from the received RF signals, and the terminal device corresponding to the device identifier included in the RF signal is taken as a target payment device.

In the embodiment of this application, if an RF signal is received, the terminal device corresponding to the device identifier included in the RF signal is taken as the target payment device.

As multiple RF signals may be received, an RF signal needs to be selected from the multiple RF signals, and the terminal device corresponding to the device identifier included in the selected RF signal is taken as the target payment device.

Hereinafter, how to select an RF signal from the received RF signals is described in detail.
First manner:
   the signal strength of each of the received RF signals is determined; and the RF signal having the signal strength greater than a set value is determined as the selected RF signal.
Second manner:
   a distance value from each of the received RF signals to a receiving device is determined; and
   the RF signal having the distance value smaller than a set threshold is determined as the selected RF signal.

   The receiving device herein may be understood as the service processing device with a checkout function.
Third manner:
   user information corresponding to the device identifier included in each of the received RF signals is acquired from a server according to a preset masking algorithm, wherein the user information is configured to distinguish each of the RF signals; and
   an RF signal is selected from the received RF signals according to the user information.

   The masking algorithm herein may be understood as the process of acquiring the user information corresponding to the device identifier included in each of the received RF signals from the server, to obtain differences of the user information corresponding to the device identifier included in each of the RF signals, thereby distinguishing different RF signals through the user information.
   In the embodiment of this application, these differences may be sent to an operator controlling the service processing device with a checkout function, and the operator determines a user waiting for payment according to the differences, thereby taking the RF signal sent by the terminal device used by the user as the selected RF signal.
   Specifically, a query message is sent to the terminal device sending the RF signal according to the user information, wherein the query message is configured to confirm whether the user using the terminal device is consistent with the user corresponding to the device identifier included in the RF signal; and
   the RF signal sent by the terminal device is determined as the selected RF signal after confirmation information sent by the terminal device is received.
   For example, the user information acquired by using the masking algorithm is a picture, the operator of the service processing device with a checkout function determines through artificial recognition that a user A waiting for payment is similar with the user recorded in the picture, and the operator may send a query message to the terminal device used by the user A through the service processing device with a checkout function. After receiving the query message, the user A sends confirmation information to the service processing device with a checkout function if confirming that he/she is the user recorded in a picture A, and based on the confirmation information, the service processing device with a checkout function determines the RF signal sent by the terminal device used by the user A as the selected RF signal.
   For example, the user information acquired by using the masking algorithm is a question, which can be raised by the operator of the service processing device with a checkout function to the user A waiting for payment. When the answer given by the user A is consistent with the answer sent by the server, the operator can determine that the RF signal sent by the terminal device used by the user A is the selected RF signal, and send confirmation information to the service processing device with a checkout function, such that the service processing device with a checkout function determines the RF signal sent by the terminal device used by the user A as the selected RF signal.
Fourth manner:
   time at which each of the RF signals is received is determined;
   each of the RF signals is sorted according to the time; and
   the RF signal having a sorting number smaller than a set number is determined as the selected RF signal according to the sorting result.

After the RF signal is selected, the terminal device corresponding to the device identifier included in the RF signal may be taken as a target payment device, and a payment operation is started.

In Step 105, first biometric feature information of the user using the terminal device is collected.

In the embodiment of this application, the first biometric feature information of the user using the terminal device is collected through an image recognition device.

Specifically, when it is determined that the user using the terminal device arrives at the detection region, the first biometric feature information of the user is collected through the image recognition device.

The biometric feature information includes one or more of face feature information, fingerprint information, palmprint information, eye print information, and iris information.

It should be noted that beacon, infrared, thermal detection, and other modes may be adopted to determine whether the user using the terminal device arrives at the detection region.

Preferably, when the biometric feature information of the user is adopted, a user having a minimum distance to the service processing device with a checkout function in the detection region is preferably selected, and the biometric feature information of the user is collected to ensure that the user is the same as that corresponding to the determined target payment device, thereby improving payment efficiency.

In Step 107, after a verification result of verifying the user's identity based on the first biometric feature information is obtained, a payment request is sent to the server if the verification result is passing the verification.

The payment request is configured to request payment achieved based on a payment account corresponding to the target payment device.

In the embodiment of this application, the obtaining the verification result of verifying the user's identity based on the first biometric feature information includes, but is not limited to, the following manners:
First manner:
   second biometric feature information of the user corresponding to the device identifier included in the selected RF signal is acquired from the server, wherein the server stores a mapping relationship between a device identifier and biometric feature information of the user corresponding to the device identifier;
   the first biometric feature information is compared with the second biometric feature information;
   a verification result of verifying the user's identity is obtained according to the comparison result.

   Specifically, when the user registers in the server or logs into an application client, the biometric feature information may be collected in advance, and thus, the server may store a mapping relationship between the device identifier and the biometric feature information of the user in advance.
   If the first biometric feature information is consistent with the second biometric feature information, it is determined that the verification on the user's identity is passed; otherwise, it is determined that the verification on the user's identity is not passed.
   It should be noted that, the terms "first" and "second" in the "first biometric feature information" and the "second biometric feature information" have no special meaning, but merely indicate the collected biometric feature information.
Second manner:
   the first biometric feature information and the device identifier included in the selected RF signal are sent to the server, such that the server verifies the user's identity according to the first biometric feature information and the second biometric feature information of the user corresponding to the device identifier included in the selected RF signal, wherein the server stores a mapping relationship between a device identifier and biometric feature information of the user corresponding to the device identifier; and
   the verification result sent by the server is received.

In either the service processing device or the server, when the first biometric feature information is compared with the second biometric feature information, biometric features of the same type are selected for comparison, for example, iris is compared with iris. That is to say, the first biometric feature information and the second biometric feature information may include more than one biometric feature, and thus, biometric features of the same type are selected for comparison.

In the embodiment of this application, when the verification is passed, it indicates that the user corresponding to the target payment device is the same as the user waiting for payment. At this time, order data of the user is determined, and payment is completed by using the payment account corresponding to the device identifier of the target payment device.

In the embodiment of this application, the manner of determining the order data of the user may be determining the order data of the user manually by the operator controlling the service processing device with a checkout function, or monitoring a commodity object selected by the user by using an Internet of Things monitoring device, to generate and send the order data to the terminal device with a checkout function, or generating the order data by the user through scanning an RFID tag in the commodity object using the terminal device being used, or generating the order data by scanning the purchased commodity object through a "scanning" function, which is not specifically defined herein.

Preferably, when the verification is passed, if the RF signal includes the order data, a payment amount is determined according to the order data; and the payment amount is carried in the payment request to be sent to the server, such that the server deducts the payment amount from the payment account according to the payment amount for completing the payment.

The technical solution provided by the embodiment of this application includes receiving RF signals including device identifiers and sent by at least one terminal device; selecting an RF signal from the received RF signals, and using a terminal device corresponding to a device identifier included in the RF signal as a target payment device; collecting first biometric feature information of a user using the terminal device; and after obtaining a verification result of verifying the user's identity based on the first biometric feature information, sending a payment request to a server if the verification result is passing the verification, wherein the payment request is configured to request for completing payment based on a payment account corresponding to the target payment device. A payment device is selected through the RF signal sent by the terminal device, the biometric feature information of the user is collected, identity authentication is performed on the user by using the biometric feature information, and payment is completed when the authentication is passed, thereby ensuring both security of payment operations and convenience in processing the payment operations, simplifying processes of the payment operations, implementing "hands-free payment" in the field of electronic payment, and effectively improving the user experience in electronic payment.

FIG. 5 is a schematic flowchart of a service processing method according to an embodiment of this application. The method may be shown as follows. The embodiment of this application may be executed by an application client having an "hands-free payment" function, and the application client is installed in a terminal device.

In Step 501, an RF signal including a device identifier is transmitted.

In the embodiment of this application, when it is detected that a short-range communication function is enabled, the RF signal is transmitted periodically or in real time.

In Step 503, payment information is received, wherein the payment information is sent by a server after completing payment based on a payment account corresponding to the device identifier carried in a payment request sent by a service processing device, and the payment request is sent by the service processing device after receiving the RF signal and when obtaining a verification result that a verification on a user's identity based on collected first biometric feature information of the user is passed.

Preferably, before the receiving payment information, the method further includes:
receiving a query message sent by the service processing device, wherein the query message is configured to confirm whether the user using the terminal device is consistent with the user corresponding to the device identifier included in the RF signal; and
sending confirmation information to the service processing device when it is confirmed that the user using the terminal device is consistent with the user corresponding to the device identifier included in the RF signal are consistent.

Preferably, before the transmitting payment information, the method further includes:
scanning a commodity object selected by the user to generate order data;
wherein the transmitting an RF signal comprises:
   transmitting the RF signal carrying the order data and the device identifier.

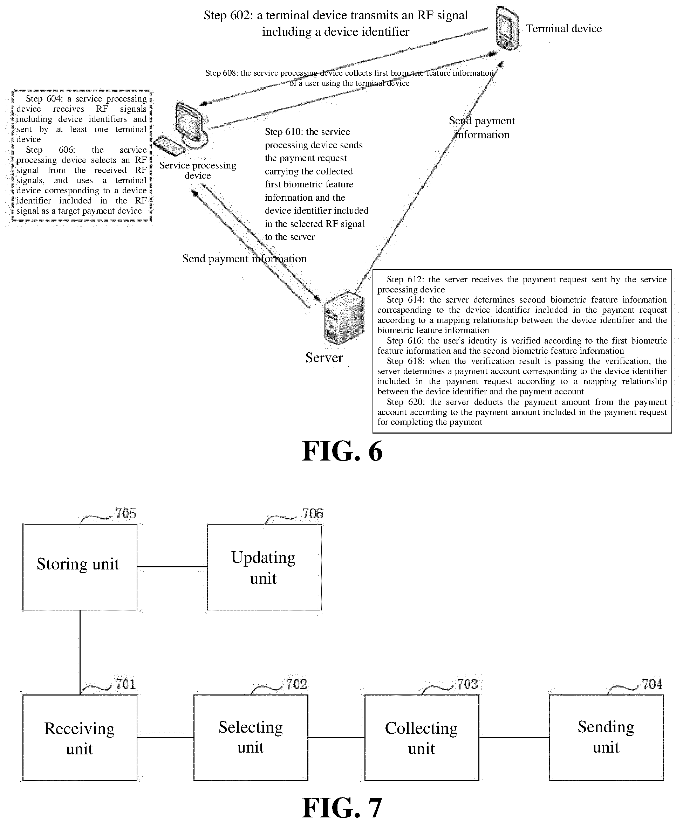

FIG. 6 is a schematic flowchart of a service processing method according to an embodiment of this application. The method may be shown as follows.

In Step 602, a terminal device transmits an RF signal including a device identifier.

Optionally, the terminal device may also send a payment request including the device identifier to a server.

In Step 604, a service processing device receives RF signals including device identifiers and sent by at least one terminal device.

In Step 606, the service processing device selects an RF signal from the received RF signals, and takes a terminal device corresponding to a device identifier included in the RF signal as a target payment device.

In Step 608, the service processing device collects first biometric feature information of a user using the terminal device.

In Step 610, the service processing device sends the payment request carrying the collected first biometric feature information and the device identifier included in the selected RF signal to the server.

In Step 612, the server receives the payment request sent by the service processing device.

In Step 614, the server determines second biometric feature information corresponding to the device identifier included in the payment request according to a mapping relationship between the device identifier and the biometric feature information.

In Step 616, the user's identity is verified according to the first biometric feature information and the second biometric feature information.

In Step 618, when the verification result is passing the verification, the server determines a payment account corresponding to the device identifier included in the payment request according to a mapping relationship between the device identifier and the payment account.

In Step 620, the server deducts the payment amount from the payment account according to the payment amount included in the payment request for completing the payment.

FIG. 7 is a schematic structural diagram of a service processing device according to an embodiment of this application. The service processing device includes: a receiving unit 701, a selecting unit 702, a collecting unit 703, and a sending unit 704, wherein
the receiving unit 701 is configured to receive RF signals including device identifiers and sent by at least one terminal device;
the selecting unit 702 is configured to select an RF signal from the received RF signals, and use a terminal device corresponding to a device identifier included in the RF signal as a target payment device;
the collecting unit 703 is configured to collect first biometric feature information of a user using the terminal device; and
the sending unit 704 is configured to, after obtaining a verification result of verifying the user's identity based on the first biometric feature information, send a payment request to a server if the verification result is passing the verification, wherein the payment request is configured to request for completing payment based on a payment account corresponding to the target payment device.

In another embodiment of this application, the selecting, by the selecting unit 702, an RF signal from the received RF signals includes:
determining a signal strength of each of the received RF signals; and
determining the RF signal having the signal strength greater than a set value as the selected RF signal.

In another embodiment of this application, the selecting, by the selecting unit 702, an RF signal from the received RF signals includes:
determining a distance value from each of the received RF signals to a receiving device; and
determining the RF signal having the distance value smaller than a set threshold as the selected RF signal.

In another embodiment of this application, the selecting, by the selecting unit 702, an RF signal from the received RF signals includes:
acquiring, from a server, user information corresponding to the device identifier included in each of the received RF signals according to a preset masking algorithm, wherein the user information is configured to distinguish each of the RF signals; and
selecting an RF signal from the received RF signals according to the user information.

In another embodiment of this application, the selecting, by the selecting unit 702, an RF signal from the received RF signals according to the user information includes:
sending a query message to the terminal device sending the RF signal according to the user information, wherein the query message is configured to confirm whether the user using the terminal device is consistent with the user corresponding to the device identifier included in the RF signal; and
determining the RF signal sent by the terminal device as the selected RF signal after receiving confirmation information sent by the terminal device.

In another embodiment of this application, the selecting, by the selecting unit 702, an RF signal from the received RF signals includes:
determining time at which each of the RF signals is received;
sorting each of the RF signals according to the time; and
determining the RF signal having a sorting number smaller than a set number as the selected RF signal according to the sorting result.

In another embodiment of this application, the receiving, by the receiving unit 701, RF signals including device identifiers and sent by at least one terminal device comprises:
receiving the RF signals including the device identifiers and sent by the at least one terminal device through a short-range communication mode.

In another embodiment of this application, the short-range communication mode includes: one or more of a Bluetooth communication mode, a near field communications (NFC) mode, a wireless fidelity (WIFI) mode, and a sound wave mode.

In another embodiment of this application, the receiving, by the receiving unit 701, RF signals including device identifiers and sent by at least one terminal device includes:
receiving the RF signals including the device identifiers and sent by the terminal device when it is detected that the terminal device arrives at a detection region.

In another embodiment of this application, the detecting by the receiving unit 701 that the terminal device arrives at a detection region includes:
transmitting a detection signal in a set detection region; and
determining that arrival of the terminal device at the detection region is detected when a feedback signal sent by the terminal device is detected.

In another embodiment of this application, the collecting, by the collecting unit 703, first biometric feature information of a user using the terminal device includes:
collecting the first biometric feature information of the user using the terminal device through an image recognition device.

In another embodiment of this application, the collecting, by the collecting unit 703, the first biometric feature information of the user using the terminal device through an image recognition device includes:
collecting the first biometric feature information of the user through the image recognition device when it is determined that the user using the terminal device arrives at the detection region.

In another embodiment of this application, the biometric feature information comprises one or more of face feature information, fingerprint information, palmprint information, eye print information, and iris information.

In another embodiment of this application, the acquiring, by the sending unit 704, a verification result of verifying the user's identity based on the first biometric feature information includes:
acquiring, from a server, second biometric feature information of the user corresponding to the device identifier included in the selected RF signal, wherein the server stores a mapping relationship between a device identifier and biometric feature information of the user corresponding to the device identifier;
comparing the first biometric feature information with the second biometric feature information; and
obtaining a verification result of verifying the user's identity according to the comparison result.

In another embodiment of this application, the obtaining, by the sending device 704, a verification result of verifying the user's identity according to the comparison result includes:
if the first biometric feature information is consistent with the second biometric feature information, determining that the verification on the user's identity is passed; otherwise, determining that the verification on the user's identity is not passed.

In another embodiment of this application, the acquiring, by the sending unit 704, a verification result of verifying the user's identity based on the first biometric feature information includes:
sending the first biometric feature information and the device identifier included in the selected RF signal to a server, so that the server verifies the user's identity according to the first biometric feature information and the second biometric feature information of the user corresponding to the device identifier included in the selected RF signal, wherein the server stores the mapping relationship between a device identifier and biometric feature information of the user corresponding to the device identifier; and
receiving the verification result sent by the server.

In another embodiment of this application, the sending, by the sending device 704, a payment request to a server includes:
when the verification is passed, if the RF signal includes order data, determining a payment amount according to the order data; and
sending the payment request carrying the payment amount to the server.

In another embodiment of this application, the service processing device further includes: a storing unit 705, wherein
the receiving unit 701 is configured to receive first monitoring data sent by an Internet of Things monitoring device, wherein the first monitoring data includes a device identifier of a terminal device used by a user entering a target site; and
the storing unit 705 is configured to store the device identifier into a user list.

In another embodiment of this application, the service processing device further includes: an updating unit 706, wherein
the receiving unit 701 is configured to receive second monitoring data sent by the Internet of Things monitoring device, wherein the second monitoring data includes a device identifier of a terminal device used by a user departing from the target site; and
the updating unit 706 is configured to update the user list according to the second monitoring data.

It should be noted that, the service processing device provided in the embodiments of this application may be implemented by means of software or hardware, which is not specifically defined herein. The service processing device selects the payment device through the RF signal sent by the terminal device, then collects the biometric feature information of the user, performs identity authentication on the user by using the biometric feature information, and completes payment when the authentication is passed, thereby ensuring both security of payment operations and convenience in processing the payment operations, simplifying processes of the payment operations, implementing "hands-free payment" in the field of electronic payment, and effectively improving the user experience in electronic payment.

Based on the same inventive concept, a service processing device is further provided in the embodiments of this application, including: at least one processor; and a memory storing programs, and configured to execute the following steps by the at least one processor:
receiving RF signals including device identifiers and sent by at least one terminal device;
selecting an RF signal from the received RF signals, and using a terminal device corresponding to a device identifier included in the RF signal as a target payment device;
collecting first biometric feature information of a user using the terminal device; and
after obtaining a verification result of verifying the user's identity based on the first biometric feature information, sending a payment request to a server if the verification result is passing the verification, wherein the payment request is configured to request for completing payment based on a payment account corresponding to the target payment device.

The specific implementation manner can be known by referring to the above embodiments, and will not be repeated herein.

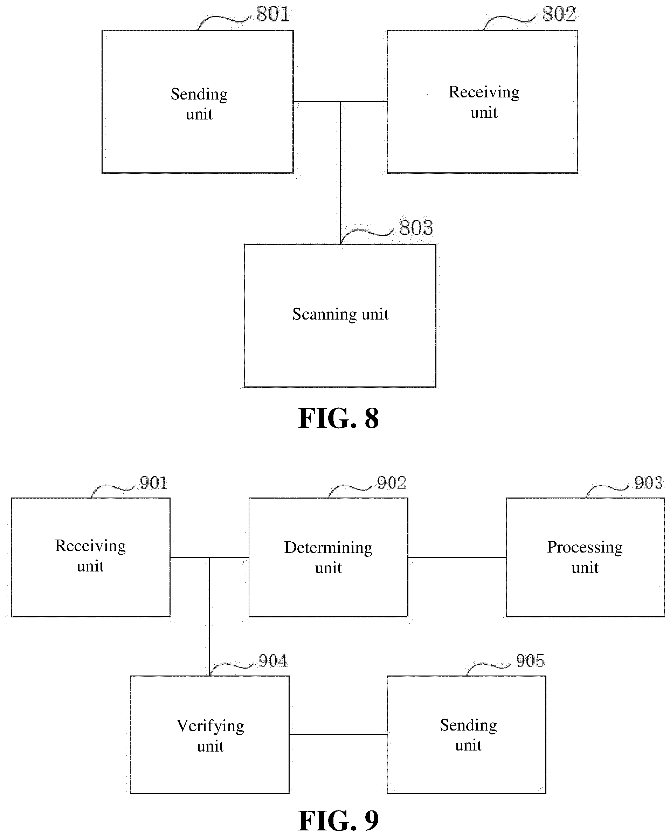

FIG. 8 is a schematic structural diagram of a service processing device according to an embodiment of this application. The service processing device includes: a sending unit 801 and a receiving unit 802, wherein
the sending unit 801 is configured to transmit an RF signal including a device identifier; and
the receiving unit 802 is configured to receive payment information, wherein the payment information is sent by a server after completing payment based on a payment account corresponding to the device identifier carried in a payment request sent by a service processing device, and the payment request is sent by the service processing device after receiving the RF signal and when obtaining a verification result that a verification on a user's identity based on collected first biometric feature information of the user is passed.

In another embodiment of this application, the transmitting an RF signal by the sending unit 801 includes:
transmitting the RF signal periodically or in real time when it is detected that a short-range communication function is enabled.

In another embodiment of this application, the receiving unit 802 is configured to, before receiving payment information, receive a query message sent by the service processing device, wherein the query message is configured to confirm whether the user using the terminal device is consistent with the user corresponding to the device identifier included in the RF signal; and
the sending unit 801 is configured to send confirmation information to the service processing device when it is confirmed that the user using the terminal device is consistent with the user corresponding to the device identifier included in the RF signal are consistent.

In another embodiment of this application, the service processing device further includes: a scanning unit 803, wherein
the scanning unit 803 is configured to, before transmitting the RF signal, scan a commodity object selected by the user to generate order data;
wherein the transmitting the RF signal by the sending unit 801 includes:
transmitting the RF signal carrying the order data and the device identifier.

It should be noted that, the service processing device provided in the embodiments of this application may be implemented by means of software or hardware, which is not specifically defined herein.

Based on the same inventive concept, a service processing device is further provided in the embodiments of this application, including: at least one processor; and a memory storing programs, and configured to execute the following steps by the at least one processor:
transmitting an RF signal including a device identifier; and
receiving payment information sent by a server after completing payment based on a payment account corresponding to the device identifier carried in a payment request sent by the service processing device, wherein the payment request is sent by the service processing device after receiving the RF signal and when obtaining a verification result that a verification on a user's identity based on collected first biometric feature information of the user is passed.

The specific implementation manner can be known with reference to the above embodiments, and thus is not repeated here.

FIG. 9 is a schematic structural diagram of a service processing device according to an embodiment of this application. The service processing device includes: a receiving unit 901, a determining unit 902, and a processing unit 903, wherein
the receiving unit 901 is configured to receive a payment request sent by a service processing device, wherein the payment request includes a device identifier of a terminal device, and the device identifier is obtained by selecting based on RF signals via the service processing device after the RF signals sent by at least one terminal device are received;
the determining unit 902 is configured to determine a payment account corresponding to the device identifier included in the payment request according to a mapping relationship between the device identifier and the payment account; and
the processing unit 903 is configured to complete payment by using the payment account.

In another embodiment of this application, the service processing device further includes: a verification unit 904, wherein
the verification unit 904 is configured to, before determining a payment account corresponding to the device identifier included in the payment request, if the payment request includes first biometric feature information of a user, determine second biometric feature information corresponding to the device identifier included in the payment request according to the mapping relationship between the device identifier and the biometric feature information; and verify the user's identity according to the first biometric feature information and the second biometric feature information.

In another embodiment of this application, the service processing device further includes: a sending unit 905, wherein
the sending unit 905 is configured to send a verification result to the service processing device.

In another embodiment of this application, the determining, by the determining unit 902, a payment account corresponding to the device identifier included in the payment request includes:
if the verification result is passing the verification, determining the payment account corresponding to the device identifier included in the payment request.

In another embodiment of this application, the completing, by the processing unit 903, payment by using the payment account includes:
deducting the payment amount from the payment account according to the payment amount included in the payment request for completing the payment.

It should be noted that, the service processing device provided in the embodiments of this application may be implemented by means of software or hardware, which is not specifically defined herein.

Based on the same inventive concept, a service processing device is further provided in the embodiments of this application, including: at least one processor; and a memory storing programs, and configured to execute the following steps by the at least one processor:
receiving a payment request sent by a service processing device, wherein the payment request includes a device identifier of a terminal device, and the device identifier is obtained by selecting based on RF signals via the service processing device after the RF signals sent by at least one terminal device are received; and
determining a payment account corresponding to the device identifier included in the payment request according to a mapping relationship between the device identifier and the payment account; and
completing payment by using the payment account.

The specific implementation manner can be known by referring to the above embodiments, and thus will not be repeated herein.

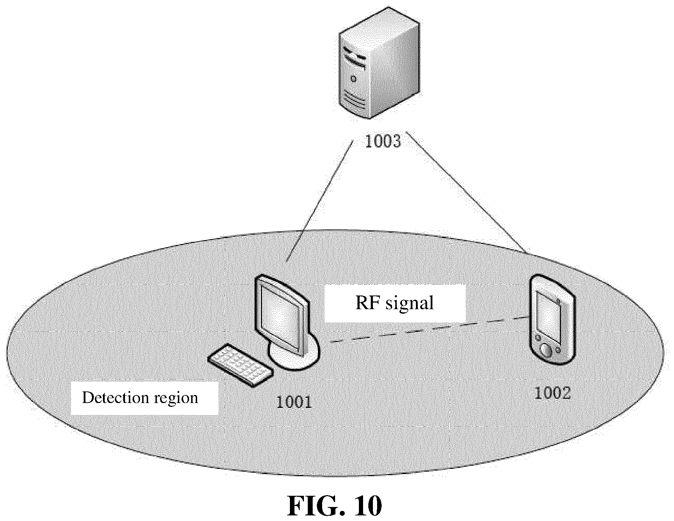

Based on the same inventive concept, FIG. 10 is a schematic structural diagram of a service processing system according to an embodiment of this application, including: a service processing device 1001, a terminal device 1002, and a server 1003, wherein
the service processing device 1001 is configured to receive RF signals including device identifiers and sent by at least one terminal device; select an RF signal from the received RF signals, and use a terminal device corresponding to the device identifier included in the RF signal as a target payment device; collect first biometric feature information of a user using the terminal device; and
after obtaining a verification result of verifying the user's identity based on the first biometric feature information, send a payment request to a server if the verification result is passing the verification, wherein the payment request is configured to request for completing payment based on a payment account corresponding to the target payment device;
the terminal device 1002 is configured to transmit an RF signal; and receive payment information;
the server 1003 is configured to receive the payment request sent by the service processing device, and complete payment based on the payment account corresponding to the device identifier included in the payment request, thereby sending the payment information to the terminal device corresponding to the device identifier.

The specific implementation manner can be known by referring to the above embodiments, and thus will not be repeated herein.

In the 1990s, an improvement on a technology can be obviously distinguished as an improvement on hardware (e.g., an improvement on a circuit structure such as a diode, a transistor, and a switch) or an improvement on software (an improvement on a method procedure). However, with the development of technologies, improvements of many method procedures at present can be considered as direct improvements on hardware circuit structures. Almost all designers program the improved method procedures into hardware circuits to obtain corresponding hardware circuit structures. Therefore, it is improper to assume that the improvement of a method procedure cannot be implemented by using a hardware entity module. For example, a Programmable Logic Device (PLD) (e.g., a Field Programmable Gate Array (FPGA)) is such an integrated circuit, and its logic functions are determined by a user programming devices. Designers program by themselves to "integrate" a digital system into a PLD, without asking a chip manufacturer to design and manufacture a dedicated integrated circuit chip. Moreover, at present, the programming is mostly implemented by using logic compiler software, instead of manually manufacturing an integrated circuit chip. The logic compiler software is similar to a software complier used for developing and writing a program, and original codes before compiling also need to be written by using a specific programming language, which is referred to as a Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL), among which Very-High-Speed Integrated Circuit Hardware Description Language (VHDL) and Verilog are most commonly used now. Those skilled in the art should also know that a hardware circuit for implementing the logic method procedure can be easily obtained by slightly logically programming the method procedure using the above several hardware description languages and programming the method procedure into an integrated circuit.

A controller can be implemented in any suitable manner. For example, the controller can employ a form of a microprocessor or a processor and a computer readable medium that stores computer readable program codes (such as software or firmware) executable by the microprocessor or processor, a logic gate, a switch, an Application Specific Integrated Circuit (ASIC), a programmable logic controller and an embedded microcontroller. Examples of the controller include, but are not limited to, the following microcontrollers: ARC 625D, Atmel AT91SAM, Microchip PIC18F26K20 and Silicone Labs C8051F320. The controller of the memory can further be implemented as a part of control logic of the memory. Those skilled in the art also know that in addition to implementing the controller by using pure computer readable program codes, it is completely feasible to logically program the method steps to enable the controller to implement the same function in a form of a logic gate, a switch, an ASIC, a programmable logic controller and an embedded microcontroller. Therefore, such a controller may be considered as a hardware component, and apparatuses included in the controller and configured to implement various functions may also be considered as structures inside the hardware component. Or, the apparatuses configured to implement various functions may even be considered as both software modules configured to implement the method and structures inside the hardware component.

The system, apparatus, modules or units illustrated in the foregoing embodiments specifically can be implemented by a computer chip or an entity, or implemented by a product having a specific function. A typical implementation device is a computer. Specifically, for example, the computer can be a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, the apparatus is divided into various units based on functions, and the units are described separately. In an implementation of this application, the functions of various units can also be implemented in one or more pieces of software and/or hardware.

Those skilled in the art should understand that the embodiments of the present invention can be provided as a method, a system, or a computer program product. Therefore, the present invention may be implemented in a form of a complete hardware embodiment, a complete software embodiment, or an embodiment combining software and hardware. Moreover, the present invention can be in the form of a computer program product implemented on one or more computer usable storage media (including, but not limited to, a magnetic disk memory, a CD-ROM, an optical memory and the like) including computer usable program codes.

The present invention is described with reference to flowcharts and/or block diagrams of the method, the device (system) and the computer program product according to the embodiments of the present invention. It should be understood that computer program instructions may be used to implement each process and/or block in the flowcharts and/or block diagrams and combinations of processes and/or blocks in the flowcharts and/or block diagrams. The computer program instructions may be provided to a general-purpose computer, a special-purpose computer, an embedded processor or a processor of another programmable data processing device to generate a machine, such that the computer or the processor of another programmable data processing device executes an instruction to generate an apparatus configured to implement functions designated in one or more processes in a flowchart and/or one or more blocks in a block diagram.

The computer program instructions may also be stored in a computer readable memory that can guide the computer or another programmable data processing device to work in a specific manner, such that the instruction stored in the computer readable memory generates an article of manufacture including an instruction apparatus, and the instruction apparatus implements functions designated by one or more processes in a flowchart and/or one or more blocks in a block diagram.

The computer program instructions may also be loaded to the computer or another programmable data processing device, such that a series of operation steps are executed on the computer or another programmable device to generate a computer implemented processing, and therefore, the instruction executed in the computer or another programmable device provides steps for implementing functions designated in one or more processes in a flowchart and/or one or more blocks in a block diagram.

In a typical configuration, the computing device includes one or more central processing units (CPUs), an input/output interface, a network interface, and a memory.

The memory may include computer readable media such as a volatile memory, a Random Access Memory (RAM), and/or a non-volatile memory, e.g., a Read-Only Memory (ROM) or a flash RAM. The memory is an example of a computer readable medium.

The computer readable medium includes non-volatile and volatile media as well as movable and non-movable media, and can implement information storage by means of any method or technology. The information can be a computer readable instruction, a data structure, and a module of a program or other data. An example of the storage medium of a computer includes, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition in this text, the computer readable medium does not include transitory media, such as a modulated data signal and a carrier.

It should be further noted that the terms "include," "comprise" or any other variations thereof are intended to cover non-exclusive inclusion, so that a process, method, commodity or device including a series of elements not only includes the elements, but also includes other elements not clearly listed, or further includes elements inherent to the process, method, commodity or device. In the absence of more limitations, an element defined by "including a/an..." does not exclude that the process, method, commodity or device including the element further has other identical elements.

This application can be described in a general context of a computer executable instruction executed by a computer, for example, a program module. Generally, the program module includes a routine, a program, an object, an assembly, a data structure, and the like used for executing a specific task or implementing a specific abstract data type. This specification can also be implemented in distributed computing environments. In the distributed computing environments, a task is executed by using remote processing devices connected via a communications network. In the distributed computing environments, the program module may be located in local and remote computer storage media including a storage device.

The embodiments in the specification are described progressively, identical or similar parts of the embodiments may be obtained with reference to each other, and each embodiment emphasizes a part different from other embodiments. Especially, the system embodiment is basically similar to the method embodiment, so it is described simply. For related parts, refer to the descriptions of the parts in the method embodiment.

The foregoing description is merely embodiments of this specification, and is not used to limit this application. For those skilled in the art, this application can have various alterations and changes. Any modification, equivalent replacement, improvement and the like made without departing from the spirit and principle of this application should be included in the scope of the claims of this application.

## Claims

1. A service processing method, comprising:
receiving RF signals including device identifiers and sent by at least one terminal device;
selecting an RF signal from the received RF signals, a terminal device corresponding to a device identifier included in the RF signal being taken as a target payment device;
collecting first biometric feature information of a user using the terminal device; and
after obtaining a verification result of verifying the user's identity based on the first biometric feature information, sending a payment request to a server if the verification result is passing the verification, wherein the payment request is configured to request for completing payment based on a payment account corresponding to the target payment device.

2. The service processing method of claim 1, wherein the selecting an RF signal from the received RF signals comprises:
determining a signal strength of each of the received RF signals; and
determining the RF signal having the signal strength greater than a set value as the selected RF signal.

3. The service processing method of claim 1, wherein the selecting an RF signal from the received RF signals comprises:
determining a distance value from each of the received RF signals to a receiving device; and
determining the RF signal having the distance value smaller than a set threshold as the selected RF signal.

4. The service processing method of claim 1, wherein the selecting an RF signal from the received RF signals comprises:
acquiring, from the server, user information corresponding to the device identifier included in each of the received RF signals according to a preset masking algorithm, wherein the user information is configured to distinguish each of the RF signals; and
selecting an RF signal from the received RF signals according to the user information.

5. The service processing method of claim 4, wherein the selecting an RF signal from the received RF signals according to the user information comprises:
sending a query message to the terminal device sending the RF signal according to the user information, wherein the query message is configured to confirm whether the user using the terminal device is consistent with the user corresponding to the device identifier included in the RF signal; and
determining the RF signal sent by the terminal device as the selected RF signal after confirmation information sent by the terminal device is received.

6. The service processing method of claim 1, wherein the selecting an RF signal from the received RF signals comprises:
determining time at which each of the RF signals is received;
sorting each of the RF signals according to the time; and
determining the RF signal having a sorting number smaller than a set number as the selected RF signal according to the sorting result.

7. The service processing method of claim 1, wherein the receiving RF signals including device identifiers and sent by at least one terminal device comprises:
receiving the RF signals including the device identifiers and sent by the at least one terminal device through a short-range communication mode.

8. The service processing method of claim 7, wherein the short-range communication mode includes: one or more of a Bluetooth communication mode, a near field communications (NFC) mode, a wireless fidelity (WIFI) mode, and a sound wave mode.

9. The service processing method of claim 1, wherein the receiving RF signals including device identifiers and sent by at least one terminal device comprises:
receiving the RF signals including the device identifiers and sent by the terminal device when detecting that the terminal device arrives at a detection region.

10. The service processing method of claim 9, wherein the detecting that the terminal device arrives at a detection region comprises:
transmitting a detection signal in a set detection region; and
when a feedback signal sent by the terminal device is received, determining that arrival of the terminal device at the detection region is detected.

11. The service processing method of claim 1, wherein the collecting first biometric feature information of a user using the terminal device comprises:
collecting the first biometric feature information of the user using the terminal device through an image recognition device.

12. The service processing method of claim 11, wherein the collecting the first biometric feature information of the user using the terminal device through an image recognition device comprises:
collecting the first biometric feature information of the user through the image recognition device when it is determined that the user using the terminal device arrives at the detection region.

13. The service processing method of claim 1 or 11, wherein the biometric feature information comprises one or more of face feature information, fingerprint information, palmprint information, eye print information, and iris information.

14. The service processing method of claim 1, wherein the obtaining a verification result of verifying the user's identity based on the first biometric feature information comprises:
acquiring, from a server, second biometric feature information of the user corresponding to the device identifier included in the selected RF signal, wherein the server stores a mapping relationship between the device identifier and the biometric feature information of the user corresponding to the device identifier;
comparing the first biometric feature information with the second biometric feature information; and
obtaining the verification result of verifying the user's identity according to the comparison result.

15. The service processing method of claim 14, wherein the obtaining the verification result of verifying the user's identity according to the comparison result includes:
if the first biometric feature information is consistent with the second biometric feature information, determining that the verification on the user's identity is passed; otherwise, determining that the verification on the user's identity is not passed.

16. The service processing method of claim 1, wherein the obtaining a verification result of verifying the user's identity based on the first biometric feature information comprises:
sending the first biometric feature information and the device identifier included in the selected RF signal to the server, so that the server verifies the user's identity according to the first biometric feature information and the second biometric feature information of the user corresponding to the device identifier included in the selected RF signal, wherein the server stores the mapping relationship between the device identifier and the biometric feature information of the user corresponding to the device identifier; and
receiving the verification result sent by the server.

17. The service processing method of claim 1 or 15 or 16, wherein the sending a payment request to a server comprises:
when the verification is passed, if the RF signal includes order data, determining a payment amount according to the order data; and
sending the payment request carrying the payment amount to the server.

18. The service processing method of claim 1, further comprising:
receiving first monitoring data sent by an Internet of Things monitoring device, wherein the first monitoring data includes a device identifier of a terminal device used by a user entering a target site; and
storing the device identifier into a user list.

19. The service processing method of claim 18, further comprising:
receiving second monitoring data sent by the Internet of Things monitoring device, wherein the second monitoring data includes a device identifier of a terminal device used by a user departing from the target site; and
updating the user list according to the second monitoring data.

20. A service processing device, comprising:
a receiving unit configured to receive RF signals including device identifiers and sent by at least one terminal device;
a selecting unit configured to select an RF signal from the received RF signals, and use a terminal device corresponding to a device identifier included in the RF signal as a target payment device;
a collecting unit configured to collect first biometric feature information of a user using the terminal device; and
a sending unit configured to, after obtaining a verification result of verifying the user's identity based on the first biometric feature information, send a payment request to a server if the verification result is passing the verification, wherein the payment request is configured to request for completing payment based on a payment account corresponding to the target payment device.

21. A service processing device, comprising: at least one processor; and a memory storing programs, and configured to execute the following steps by the at least one processor:
receiving RF signals including device identifiers and sent by at least one terminal device;
selecting an RF signal from the received RF signals, and using a terminal device corresponding to a device identifier included in the RF signal as a target payment device;
collecting first biometric feature information of a user using the terminal device; and
after obtaining a verification result of verifying the user's identity based on the first biometric feature information, sending a payment request to a server if the verification result is passing the verification, wherein the payment request is configured to request for completing payment based on a payment account corresponding to the target payment device.

22. A service processing method, comprising:
transmitting an RF signal including a device identifier; and
receiving payment information, the payment information being sent by a server after completing payment based on a payment account corresponding to the device identifier carried in a payment request sent by a service processing device, wherein the payment request is sent by the service processing device after receiving the RF signal and when obtaining a verification result that a verification on a user's identity based on collected first biometric feature information of the user is passed.

23. The service processing method of claim 22, wherein the transmitting an RF signal comprises:
transmitting the RF signal periodically or in real time when it is detected that a short-range communication function is enabled.

24. The service processing method of claim 22, before the receiving payment information, further comprising:
receiving a query message sent by the service processing device, wherein the query message is configured to confirm whether the user using the terminal device is consistent with the user corresponding to the device identifier included in the RF signal; and
sending confirmation information to the service processing device when it is confirmed that the user using the terminal device is consistent with the user corresponding to the device identifier included in the RF signal are consistent.

25. The service processing method of claim 22, before the transmitting an RF signal, further comprising:
scanning a commodity object selected by a user to generate order data,
wherein the transmitting an RF signal comprises:
transmitting the RF signal carrying the order data and the device identifier.

26. A service processing device, comprising:
a sending unit configured to transmit an RF signal including a device identifier; and
a receiving unit configured to receive payment information sent by a server after completing payment based on a payment account corresponding to the device identifier carried in a payment request sent by the service processing device, wherein the payment request is sent by the service processing device after receiving the RF signal and when obtaining a verification result that a verification on a user's identity based on collected first biometric feature information of the user is passed.

27. A service processing device, comprising: at least one processor; and a memory storing programs, and configured to execute the following steps by the at least one processor:
transmitting an RF signal including a device identifier; and
receiving payment information sent by a server after completing payment based on a payment account corresponding to the device identifier carried in a payment request sent by the service processing device, wherein the payment request is sent by the service processing device after receiving the RF signal and when obtaining a verification result that a verification on a user's identity based on collected first biometric feature information of the user is passed.

28. A service processing method, comprising:
receiving a payment request sent by a service processing device, wherein the payment request includes a device identifier of a terminal device, and the device identifier is obtained by selecting based on RF signals via the service processing device after the RF signals sent by at least one terminal device are received;
determining a payment account corresponding to the device identifier included in the payment request according to a mapping relationship between the device identifier and the payment account; and
using the payment account to complete payment.

29. The service processing method of claim 28, before the determining a payment account corresponding to the device identifier included in the payment request, further comprising:
if the payment request includes first biometric feature information of a user, determining second biometric feature information corresponding to the device identifier included in the payment request according to a mapping relationship between the device identifier and the biometric feature information; and
verifying the user's identity according to the first biometric feature information and the second biometric feature information.

30. The service processing method of claim 29, further comprising:
sending a verification result to the service processing device.

31. The service processing method of claim 29, wherein the determining a payment account corresponding to the device identifier included in the payment request comprises:
when the verification result is passing the verification, determining the payment account corresponding to the device identifier included in the payment request.

32. The service processing method of claim 28, wherein the using the payment account to complete payment comprises:
deducting the payment amount from the payment account according to the payment amount included in the payment request, for completing the payment.

33. A service processing device, comprising:
a receiving unit configured to receive a payment request sent by the service processing device, wherein the payment request includes a device identifier of a terminal device, and the device identifier is obtained by selecting based on RF signals via the service processing device after the RF signals sent by at least one terminal device are received; and
a determining unit configured to determine a payment account corresponding to the device identifier included in the payment request according to a mapping relationship between the device identifier and the payment account; and
a processing unit configured to use the payment account to complete payment.

34. A service processing device, comprising: at least one processor; and a memory storing programs, and configured to execute the following steps by the at least one processor:
receiving a payment request sent by the service processing device, wherein the payment request includes a device identifier of a terminal device, and the device identifier is obtained by selecting based on RF signals via the service processing device after the RF signals sent by at least one terminal device are received;
determining a payment account corresponding to the device identifier included in the payment request according to a mapping relationship between the device identifier and the payment account; and
using the payment account to complete payment.

35. A service processing system, comprising: a service processing device, a terminal device, and a server, wherein
the service processing device is configured to receive RF signals including device identifiers and sent by at least one terminal device; select an RF signal from the received RF signals, and use a terminal device corresponding to a device identifier included in the RF signal as a target payment device; collect first biometric feature information of a user using the terminal device;
and after obtaining a verification result of verifying the user's identity based on the first biometric feature information, send a payment request to the server if the verification result is passing the verification, wherein the payment request is configured to request for completing payment based on a payment account corresponding to the target payment device;
the terminal device is configured to transmit an RF signal and receive payment information; and
the server is configured to receive the payment request sent by the service processing device, and complete payment based on the payment account corresponding to the device identifier included in the payment request, thereby sending the payment information to the terminal device corresponding to the device identifier.
